# FASCICULE DE BREVET EUROPEEN

(11) **EP 1 670 318 B1**
(45) Date de publication et mention de la délivrance du brevet: **23.07.2008**
(21) Numéro de dépôt: 04787485.4
(22) Date de dépôt: 29.09.2004
(51) Int. Cl.: A23C 19/09

(54) **PRODUITS FROMAGERS AYANT LA TEXTURE DE FROMAGES A PATE FILEE ET LE GOUT DE PRODUITS LAITIERS FERMENTES, ET PROCEDE DE FABRICATION**
KÄSEPRODUKTE MIT WEICHER EXTRUSIONSKÄSETEXTUR UND EINEM GESCHMACK VON FERMENTIERTEM MILCHPRODUKT SOWIE VERFAHREN ZUR HERSTELLUNG DIESER KÄSEPRODUKTE
CHEESE PRODUCTS PROVIDED WITH A SOFT EXTRUDED CHEESE TEXTURE AND FERMENTED MILK PRODUCT TASTE AND METHOD FOR PRODUCING SAID CHEESE PRODUCTS

(30) Priorité: 02.10.2003 FR 0311567
(43) Date de publication de la demande: 21.06.2006
(73) Titulaire: FROMAGERIES BEL, 75008 Paris (FR)
(72) Inventeur: VIAUD, Florence, F-39210 VOITEUR (FR)
(74) Mandataire: Colombet, Alain André
(86) Numéro de dépôt international: PCT/FR2004/002470
(87) Numéro de publication internationale: WO 2005/032266

(56) Documents cités:
- EP-A- 0 535 728
- EP-A- 0 815 737
- DE-A- 2 358 414
- US-A- 5 902 625
- US-A1- 2002 127 301

## Description

L'invention concerne un procédé de fabrication de nouveaux produits fromagers ayant une texture fibreuse et un goût frais et lactique par traitement d'une matière première de départ comprenant un fromage à pâte filée à texture ferme et fibreuse, ajout d'une quantité définie de produit laitier fermenté et traitement du mélange.

On entend par produit fromager à texture fibreuse un produit obtenu selon les procédés utilisés en fromagerie pour la réalisation de fromages à pâtes filées dont le représentant le plus connu de cette famille est la mozzarella. Le procédé de fabrication de ces produits est bien connu de l'homme de métier ; il est décrit par exemple dans l'ouvrage intitulé « LE FROMAGE » de A. Eck (Ed.Tec § Doc - 1997, p. 357). Il se caractérise par une accentuation de l'égouttage, par une étape de cuisson et une étape de filage qui confèrent au produit fini leur texture particulière : compacte, élastique et fibreuse. Cette texture est intéressante car recherchée du consommateur, le marché de la mozzarella étant en pleine expansion. Par contre, ces produits dans la mesure où ils ne subissent pas d'étapes ultérieures d'affinage présentent un goût légèrement acide (pH compris entre 5,15 et 5,20) mais généralement neutre et fade ce qui limite leur utilisation comme ingrédients culinaires à froid (salade) ou à chaud (pizza).

On entend par produits laitiers fermentés les produits obtenus par la multiplication de bactéries lactiques dans une préparation de lait qui entraîne la coagulation ou l'épaississement de ce dernier et lui confère une saveur acide plus ou moins prononcée. Les caractéristiques propres des différents laits fermentés sont dues à la variation particulière de certains facteurs comme la composition du lait, la température d'incubation (liée au type de ferments ou de microorganismes utilisés car dépendant des conditions optimales de développement de ces derniers), la flore lactique ou autre que lactique. Le représentant le plus connu de cette famille est le yaourt mais il existe un nombre considérable d'autres produits fermentés dont la flore microbienne est différente de celle du yaourt ; ces laits ont des textures très variables ; on trouve des produits épais, d'autres filants et enfin d'autres liquides, de même on a une grande variété dans l'acidité de ces produits : de faiblement acides à très acides. Il existe 4 zones où ces produits sont très développés : les pays nordiques (Skyr, Lattemjölk, etc...), le bassin méditerranéen (Leben, Toulum), la Russie et autres pays de l'Est (Kéfir, Koumiss), et l'Amérique du Nord (« cultured buttermilk »).

Une des caractéristiques essentielles de ces produits est leur faible teneur en extrait-sec, généralement inférieure à 30 %. A titre d'illustration, celle des yaourts est comprise entre 10 % et 20 %.

Ces produits se caractérisent par des profils aromatiques particuliers qui leur sont conférés par la présence de composés aromatiques issus de la fermentation du lait par la flore ensemencée.

Ainsi le goût particulier du yaourt est dû à la présence de composés aromatiques tels que l'acétaldéhyde, le diacétyl et l'acétoïne, des composés issus de la transformation d'acide lactique obtenu par fermentation du lait par les 2 bactéries spécifiques du yaourt : *Streptococcus thermophilus* et *Lactobacillus bulgaricus*.

Il a donc semblé intéressant à la demanderesse de proposer au consommateur de nouveaux produits fromagers qui présenteraient à la fois une texture compacte, élastique et fibreuse recherchée par le consommateur et un goût acide de produit laitier fermenté tel que le yaourt (goût très apprécié également par le consommateur) et qui peuvent être consommés en l'état (à croquer, à trancher voire à tartiner) ou comme ingrédient culinaire (salade, sandwich, panini...).

S'il peut être envisagé de réaliser des produits à texture compacte, élastique et fibreuse présentant un profil aromatique caractéristique de produits laitiers fermentés, conféré par le développement de ferments spécifiques, en ensemençant le lait à transformer en fromage avec ces ferments, ces derniers sont toutefois inactivés lors de l'étape de cuisson des lamelles ou cossettes de caillé dans le lactosérum à 70-85°C, étape caractéristique de la fabrication des pâtes fromagères filées, et ne pourront donc se développer pour renforcer le goût caractéristique obtenu par le développement desdits ferments, au cours de la commercialisation. Par ailleurs, pour que ce procédé confère au produit final les caractéristiques aromatiques souhaitées, il serait nécessaire d'ajouter au lait une quantité importante de ferments spécifiques car il se produit également une déperdition des ferments au cours de l'étape d'égouttage.

On trouve dans le commerce, et la littérature (voir par exemple la demande de brevet EP 0 815 737) des fromages fondus auxquels on a conféré un goût de yaourt ou d'autres produits fermentés ; dans ce cas, le procédé consiste à incorporer le produit fermenté après le traitement thermique de fonte afin d'éviter l'inhibition des ferments et toute déperdition aromatique survenant lors de ce traitement thermique de fonte. Il est toutefois impossible d'obtenir par cette voie des textures fibreuses car le traitement de fonte déstructure la texture initiale de la pâte filée, et cette texture fibreuse ne se retrouve donc pas dans le produit fini.

Les auteurs du brevet EP 0 535 728 décrivent quant à eux un procédé qui vise à réaliser des produits fromagers présentant un goût, une texture et une consistance de fromages affinés par mélange de fromages frais avec des pâtes pressées et traitement dudit mélange à une température comprise entre 35 et 65°C. Toutefois le produit frais utilisé a un extrait-sec supérieur à 40% ; et représente la majeure partie du mélange (supérieure ou égale à 30%). Par ailleurs, l'objectif de ce brevet EP 0 535 728 est de conférer un goût de fromage affiné à des produits frais c'est-à-dire de réaliser des produits « affinés » sans étape de maturation par apport de produits affinés sur une base neutre, voire légèrement acide ; de plus, la texture des produits finis est du type non homogène « grumeleuse » jusqu'au type texture « semoule », du fait de la quantité de produit frais apporté (> 30 %).

US-A-5 902 625 enseigne un procédé de préparation d'un produit fromager fibreux, comprenant les étapes de pasteurisation, acidification, coagulation, coupage du coagulum, chauffage, malaxage, moulage et réfrigération, dans lequel un additif est ajouté. La température du fromage est maintenu à 43-71 °C (110-160°F C) quand l'additif est mélangé dans le fromage. Cet additif peut être une poudre de fromage.

Tous ces procédés antérieurs ne permettent pas de réaliser des produits à texture compacte, élastique et fibreuse et à goût acide, frais, conféré par un produit laitier fermenté comportant une flore vivante. Afin de permettre la fabrication de tels produits la demanderesse a mis au point un nouveau procédé de fabrication qui élimine les inconvénients sus-cités et permet d'obtenir et d'offrir au consommateur de tels produits fromagers

L'objet de l'invention concerne donc un nouveau procédé de fabrication de produits fromagers à texture ferme, élastique et fibreuse et aux caractéristiques aromatiques de produits laitiers fermentés et qui permet de maintenir dans le produit final la flore vivante nécessaire à l'obtention de propriétés aromatiques caractéristiques du produit laitier fermenté frais.

Elle concerne également les nouveaux produits fromagers obtenus par ce procédé et qui présentent à fois une texture ferme, élastique et fibreuse, une teneur en extrait-sec supérieure à 40 %, et des propriétés aromatiques spécifiques des produits laitiers fermentés.

### Définitions

Par "*fromage à pâte filée*" on entend un fromage obtenu à partir d'un lait par coagulation enzymatique, le caillé étant alors égoutté par tranchage et brassage, puis laissé au repos jusqu'à l'obtention d'un pH 5,15-5,20. L'égouttage du caillé est ensuite accentué par une étape de filage consistant à immerger le caillé, entier ou fragmenté en lamelles ou cosettes, dans de l'eau ou du lactosérum chaud (70 à 85°C) pendant 10 à 20 minutes, la masse fromagère obtenue étant alors malaxée et étirée. Cette étape modifie la texture du produit qui devient compacte et élastique mais contribue à la destruction de la plupart des microorganismes et enzymes. Les principaux exemples de fromages à pâte filée sont la mozzarella, le provolone et le cacciocavallo. Dans le cadre de l'invention tout fromage à pâte filée peut être utilisé sous réserve que ce fromage ait un goût neutre, de manière à ne pas interférer avec le goût frais et acide apporté par le produit laitier fermenté. Ainsi, des fromages tels que le provolone et le cacciocavallo, qui sont normalement commercialisés après affinage, peuvent être utilisés pour la mise en oeuvre du procédé selon l'invention lorsqu'ils sont jeunes, c'est à dire peu ou pas affinés.

Par "*fromage à pâte pressée*" on entend un fromage obtenu par coagulation du lait par la présure, découpage du caillé, brassage, parfois lavage, et dont l'égouttage n'est pas spontané mais accéléré et complété par pressage, à la main ou mécanique. Des exemples de fromages à pâte pressée incluent des fromages à pâte pressée souple (ayant un extrait sec compris entre 45 et 55%), tels que le Saint Paulin, le Port Salut, le Gouda, la Mimolette, ou des fromages à pâte pressée ferme (ayant un extrait sec supérieur ou égale à 55%), tel que le cheddar, l'edam, le cantal.

La dénomination "*produit laitier fermenté*" est réservée à un produit laitier préparé avec des laits écrémés ou non, ou des laits concentrés ou en poudre, écrémés ou non, enrichis ou non de constituants du lait, ayant subi un traitement thermique au moins équivalent à la pasteurisation, ensemencés avec des microorganismes appartenant à l'espèce ou aux espèces caractéristiques de chaque produit. Cette fermentation conduit à la prise en masse du lait. Le coagulum obtenu est ferme, sans exsudation de lactosérum. Le yaourt ou yoghourt et le lait caillé sont les laits fermentés le plus consommés. La dénomination "*yaourt*" est réservée au lait fermenté obtenu par le développement des seules bactéries lactiques thermophiles spécifiques (*Lactobacillus Bulgaricus* et *Streptococcus Thermophilus*) qui doivent être ensemencées simultanément et se trouver vivantes dans le produit fini, à raison d'au moins 10 millions de bactéries par gramme rapportées à la partie lactée. Dans le contexte de l'invention, on désignera par "*lait caillé*" les laits fermentés pour lesquels des bactéries autres que *Lactobacillus Bulgaricus* et *Streptococcus Thermophilus* sont employées. Les plus utilisées actuellement sont *Bifidobacterium longum, Bifidobacterium bifidum* et *Lactobacillus acidophilus*. Dans le cadre de la présente invention, l'expression "*produit laitier fermenté frais*" est utilisée pour décrire un produit laitier fermenté contenant des ferments vivants, par opposition à des produits laitiers fermentés thermisés, qui ont subi un traitement thermique et ne contiennent plus de ferments vivants (Codex Alimentarus).

Par "*élément figuré*" on entend un élément qui présente une forme visible, reconnaissable, au sein du produit fromager. Des exemples d'éléments figurés incluent des fruits frais ou secs (par exemple des abricots, des noix telles que des noix de Grenoble, des noisettes, des amandes, etc..), entiers ou en morceaux, ou encore des morceaux de légumes et/ou de viande, des épices et aromates, etc....

Par "*agitation*" on entend un traitement mécanique permettant l'incorporation d'un composant dans un autre composant et l'homogénéisation du mélange sans destruction des composants de départ.

Préférentiellement, la vitesse de rotation pour l'agitation est comprise entre 50 et 600 rpm.

Par "*cisaillement*" on entend une action mécanique intense sur la structure du produit traité pour en modifier la structure dans le but d'obtenir un produit différent. Préférentiellement, le cisaillement mis en oeuvre selon l'invention entraîne une émulsification du mélange. Ce traitement peut être effectué par exemple dans un appareil de type cutter ou tout moyen de mélange équivalent tel que pétrin, malaxeur, cuiseur-mélangeur, mélangeur, co-malaxeur, extrudeuse, etc. On entend par "*faible cisaillement*" les contraintes non supérieures à celles exercées dans un équipement de type "cutter" à des vitesses allant jusqu'à 1 500 rpm. On peut citer par exemple les traitements réalisés dans des appareils du commerce de type cutter (par exemple ceux commercialisés sous la dénomination STEPHAN®) utilisés traditionnellement en charcuterie ou en fabrication de fromage fondu tournant à des vitesses comprises entre 50 et 1 500 rpm, avantageusement encore entre 200 et 500 rpm. Plus la vitesse de cisaillement est élevée, plus le réseau protéique du fromage se trouve détruit et donc plus la texture est modifiée.

### Procédé de fabrication de nouveaux produits fromagers

L'invention propose donc un procédé de fabrication d'un produit fromager ayant la texture fibreuse d'un fromage à pâte filée et présentant le goût d'un produit laitier fermenté frais, ledit procédé comprenant les étapes consistant à :
a) réduire par broyage ou râpage la taille d'un fromage à pâte filée, d'un mélange de fromages à pâte filée, ou d'un mélange de fromages comprenant au moins 50% en poids, par rapport au poids total du mélange, d'un ou plusieurs fromages à pâte filée;
b) chauffer jusqu'à une température comprise entre 60°C et 70°C et traiter, sous cisaillement, ledit fromage à pâte filée, ledit mélange de fromages à pâte filée ou ledit mélange de fromages comprenant au moins 50% en poids d'un ou plusieurs fromages à pâte filée, pendant un temps suffisant pour obtenir une masse fromagère homogène et malléable qui permet l'incorporation d'un produit fermenté ;
c) incorporer sous agitation un produit laitier fermenté frais, présentant une flore vivante, en une quantité suffisante pour conférer au produit fromager final les caractéristiques aromatiques du produit laitier fermenté incorporé, ladite quantité étant inférieure à 20% en poids par rapport au poids du mélange constitué par la masse fromagère et le produit laitier fermenté, la masse fromagère étant préalablement refroidie à une température inférieure à la température de destruction de la flore présente dans ledit produit laitier fermenté frais.

Éventuellement, le produit fromager obtenu peut alors être mis en forme et refroidi, avant ou après conditionnement.

De façon inattendue, la demanderesse a ainsi montré qu'afin de conserver les caractéristiques texturales des pâtes filées, il était indispensable de traiter ces dernières, ou un mélange les contenant, à une température d'au moins 60°C et d'au plus 70°C, plus particulièrement à une température comprise entre 65 et 70°C, car :
- à des températures supérieures à 70°C, l'état structurel d'origine (texture fibreuse) des pâtes filées est détruit par le traitement thermique, et le traitement thermique tend à produire des produits fromagers de type fromage fondu,
- à des températures inférieures à 60°C, on obtient une masse non homogène, présentant une séparation de phase, c'est-à-dire une exsudation de sérum rendant le produit non malléable. Une température supérieure à 60°C, et encore plus particulièrement supérieure à 65°C, permet d'éviter ce phénomène d'exsudation.

Par ailleurs, le traitement à des températures supérieures à 60°C, par exemple 65°C, a l'avantage de favoriser la protection microbiologique du produit.

On peut utiliser un mélange d'un ou plusieurs fromages à pâte filée avec d'autres fromages ou matières premières laitières, telles que des concentrés laitiers ou des caillés de fromagerie. Le mélange contient alors du fromage à pâte filée dans une proportion d'au moins 50 % en poids par rapport au poids total du mélange, afin d'obtenir un produit final avec une texture fibreuse. Les fromages utilisés dans le mélange, hormis le(s) fromage(s) à pâte filée, sont de préférence des fromages à pâte pressée tels que des gouda, cheddar, ou edam, peu ou pas affinés, afin de ne pas masquer le goût de produit laitier fermenté frais dans le produit final. Ainsi, ledit mélange de fromages comprenant au moins 50% en poids d'un ou plusieurs fromages à pâte filée peut comprendre un ou plusieurs fromages à pâte pressée sélectionnés dans le groupe constitué du gouda, du cheddar, et de l'edam, lesdits fromages à pâte pressée étant peu ou pas affinés. Par "fromage peu ou pas affiné" on entend des fromages qui au cours de leur fabrication n'ont pas fait l'objet d'ensemencement en germes d'affinage, ou, lorsqu'il y a eu ensemencement du caillé en ferments lactiques (acidification), des fromages qui sont conservés à des températures telles que ces ferments ne se développent pas, par exemple à une température inférieure à 5°C. Il s'agit donc de fromages qui n'ont pas développé de caractéristiques aromatiques susceptibles de masquer le goût du produit laitier fermenté frais ajouté au cours du procédé selon l'invention.

De façon préférentielle, le fromage à pâte filée est de la mozzarella. Un mélange de fromages à pâte filée, préférentiellement contenant de la mozzarella, peut par exemple être utilisé.

De manière préférentielle, on utilise un fromage à pâte filée, ou un mélange constitué exclusivement de fromages à pâte filée, pour mettre en oeuvre le procédé selon l'invention. Ainsi, un mode de réalisation du procédé selon l'invention comprend les étapes consistant à :
a) réduire par broyage ou râpage la taille d'un fromage à pâte filée, ou d'un mélange de fromages à pâte filée ;
b) chauffer jusqu'à une température comprise entre 60°C et 70°C et traiter, sous cisaillement, ledit fromage à pâte filée, ou ledit mélange de fromages à pâte filée, pendant un temps suffisant pour obtenir une masse fromagère homogène et malléable qui permet l'incorporation d'un produit fermenté ;
c) incorporer sous agitation un produit laitier fermenté frais, présentant une flore vivante, en une quantité suffisante pour conférer au produit fromager final les caractéristiques aromatiques du produit laitier fermenté incorporé, la masse fromagère étant préalablement refroidie à une température inférieure à la température de destruction de la flore présente dans ledit produit laitier fermenté frais.

De manière avantageuse, préalablement à l'étape b) de traitement thermique décrite ci-dessus, on réduit la taille du fromage à pâte filée, ou du mélange constitués par ou contenant des fromages à pâte filée, par râpage ou broyage. Préférentiellement, le fromage à pâte filée ou le mélange constitués par ou contenant des fromages à pâte filée, est râpé en brins, broyé, et découpé en morceaux de taille inférieure à 2 cm, préférentiellement en morceaux d'une taille environ égale à 1 mm. L'invention concerne donc un procédé dans lequel le fromage à pâte filée, le mélange de fromages à pâte filée, ou le mélange de fromages comprenant au moins 50% en poids d'un ou plusieurs fromages à pâte filée, est réduit en morceaux de taille inférieure à 2 cm au cours de l'étape a) décrite ci-dessus.

Préférentiellement, cette étape de broyage met en ouvre un traitement mécanique de cisaillement, par exemple réalisé en cutter ou par tout autre moyen équivalent tel que broyeur ou extrudeuse. Préférentiellement il s'agit d'un cisaillement de forte intensité, par exemple un traitement au cutter à 1300 rpm, pendant 30 secondes environ.

On peut ajouter à la fin de cette étape des éléments figurés, de préférence en une quantité inférieure ou égale à 10% en poids par rapport au poids du produit fromager final.

Cette matière première, avantageusement broyée et comprenant éventuellement des éléments figurés, est alors soumise à un traitement thermique à une température comprise entre 60 et 70°C comme indiqué dans l'étape b) ci-dessus, de préférence entre 65 et 70°C.

Plus spécifiquement, cette étape de traitement thermique peut comprendre une phase de chauffage jusqu'à la température désirée, c'est à dire jusqu'à 60-70°C, de préférence entre 65 et 70°C, puis une phase de chambrage, c'est à dire de maintien du mélange à température constante.

En plus du traitement thermique, un traitement mécanique de cisaillement, de préférence sous faible cisaillement, est également appliqué à cette matière première. Ce traitement s'effectue de préférence dans un cutter ou tout moyen de mélange équivalent tel que malaxeur, cuiseur-mélangeur, mélangeur, co-malaxeur ou extrudeuse, etc....

Ainsi, selon un mode de réalisation particulier, l'étape b) de traitement thermique peut comprendre une étape de chauffage jusqu'à une température comprise entre 60°C et 70°C, de préférence entre 65 et 70°C, sous cisaillement, dudit fromage à pâte filée, dudit mélange de fromages à pâte filée, ou dudit mélange de fromages comprenant au moins 50% en poids d'un ou plusieurs fromages à pâte filée, et une étape de chambrage, consistant à maintenir la température dudit fromage à pâte filée, ou dudit mélange de fromages à pâte filée, pendant un temps suffisant pour obtenir une masse fromagère homogène et malléable.

La durée du traitement thermique mis en oeuvre peut dépendre de la nature du traitement mécanique auquel est simultanément soumise la matière première. L'ajustement de la durée des phases de chauffage et de chambrage est toutefois à la portée de l'homme du métier. Préférentiellement, la durée totale du traitement thermique est généralement comprise entre 1 et 6 minutes, avantageusement entre 1 et 5 minutes, préférentiellement encore entre 2 et 4 minutes. Avantageusement, la phase de chauffage dure entre environ 30 secondes et 4 minutes, préférentiellement entre 1 et 2 minutes, et la phase de chambrage dure entre environ 30 secondes et 2 minutes, préférentiellement entre environ 40 et 90 secondes.

La masse fromagère obtenue est alors refroidie comme indiqué dans l'étape c) ci-dessus, à une température inférieure à la température d'inactivation des ferments présents dans le produit laitier fermenté, ou le mélange de produits laitiers fermentés, que l'on souhaite incorporer à cette masse. Cette température est par exemple préférentiellement inférieure ou égale à 50°C, pour les ferments du yaourt *Lactobacillus Bulgaricus* et *Streptococcus Thermophilus.*

Le refroidissement peut-être réalisé selon plusieurs alternatives : par exemple, par un traitement mécanique en cutter, sous faible cisaillement, avec une vitesse de rotation comprise entre 50 et 600 rpm, ou par tout moyen équivalent tel que malaxeur, cuiseur-mélangeur, mélangeur, co-malaxeur ou extrudeuse, etc....

Dans une troisième étape, on incorpore sous agitation, de préférence sous faible agitation, par exemple à environ 50-600 rpm, de préférence entre 100 et 250 rpm, à la masse fromagère refroidie la quantité souhaité de produit laitier fermenté frais jusqu'à l'obtention d'un mélange homogène. Le produit laitier fermenté frais peut indifféremment être à l'état liquide ou pâteux. La quantité incorporée dépend de l'intensité aromatique finale que l'on veut obtenir. La proportion de produit laitier fermenté frais est inférieure à 20%, préférentiellement comprise entre 3 et 20%, en poids par rapport au poids total du mélange constitué par la masse fromagère et le produit laitier fermenté, afin de maintenir la texture ferme et fibreuse au produit final.

En effet, au-delà d'une teneur de 20%, la texture du produit final s'éloigne de la texture de la pâte filée utilisée par ramollissement excessif et le produit final alors obtenu ne permet d'atteindre l'objectif fixé.

On comprendra que le procédé selon l'invention n'est pas limité au mode de réalisation selon lequel un seul produit laitier fermenté frais est ajouté à la masse fromagère. L'incorporation d'un mélange de produits laitiers fermentés frais, dans la limite de 20%, préférentiellement entre 3 et 20%, en poids par rapport au poids du mélange final constitué par la masse fromagère et les produits laitiers, est également dans la portée de l'invention. En outre, le pourcentage de ferments vivants dans le mélange final peut être augmenté en incorporant des souches de ferments utilisés pour la fabrication de produits laitiers fermentés, tels que ceux mentionnés plus haut. Ces souches peuvent être apportées sous forme congelée ou lyophilisée et contribuent à renforcer le goût frais du produit fromager selon l'invention.

Avantageusement, le produit laitier fermenté frais, ou le mélange de produits laitiers fermentés frais, a une teneur en extrait-sec inférieure à 30%.

On peut par exemple ajouter des produits fermentés contenant des bactéries « probiotiques » tels que les bifidobactéries ayant un effet bénéfique sur la santé. Le lait caillé constitue un autre exemple de produit laitier fermenté selon l'invention.

Il est également possible d'intensifier la note aromatique en ajoutant une faible quantité d'arôme au mélange constitué de la masse fromagère et d'au moins un produit laitier fermenté. Préférentiellement, des arômes de produits laitiers fermentés, tels que l'acétoïne, l'acétaldéhyde, le diacétyle et l'acide acétique, peuvent être utilisés dans le cadre de la présente invention. Des éléments figurés peuvent en outre être ajoutés au cours de cette étape.

Le produit fromager ainsi obtenu à l'issue de cette troisième étape, comprenant les ferments vivants, peut ensuite être mis en forme. Une étape supplémentaire de refroidissement peut être mise en oeuvre. De manière préférentielle, le produit fromager final est refroidi à une température inférieure à 15°C. Le conditionnement peut être effectué avant ou après le refroidissement par tout moyen approprié : conditionnement sous matériau plastique, aluminium, barquette ou coupelle operculée, bi-coque, enrobage sous cire, sous enrobage comestible, etc.

L'étape de mise en forme du produit fromager final peut se faire par tout moyen classique de dosage, coulage ou moulage selon la fermeté du produit, la forme et la taille souhaitées du produit fini.

Selon un mode particulier de réalisation, l'invention propose un procédé comprenant les étapes consistant à :
a) broyer de la mozzarella en morceaux de taille inférieure à 2 cm ;
b) chauffer pendant 2 à 4 minutes, jusqu'à une température d'environ 66°C, en cuiseur-malaxeur avec une vitesse de rotation de 160 rpm, ladite mozzarella broyée, puis maintenir ladite mozzarella broyée à 66°C pendant 1 à 2 minutes, de manière à obtenir une masse fromagère homogène et malléable ;
c) refroidir la masse fromagère ainsi obtenue jusqu'à 50°C par agitation à 100 rpm ;
d) incorporer du yaourt dans cette masse fromagère sous une agitation de 100 rpm, ledit yaourt étant ajouté en une quantité environ égale à 10% en poids par rapport au poids total du mélange constitué par la masse fromagère et le yaourt ; et
e) éventuellement, mettre en forme et conditionner le produit obtenu.

Selon un autre mode de réalisation particulier, le procédé selon l'invention comprend les étapes consistant à :
a) broyer de la mozzarella dans un cutter avec une vitesse de rotation de 1300 rpm pendant environ 30 secondes ;
b) ajouter des morceaux d'abricot ;
c) chauffer pendant 2 à 3 minutes, jusqu'à une température d'environ 70°C, en cutter avec une vitesse de rotation de 500 rpm, le mélange de mozzarella broyée et de morceaux d'abricot, puis maintenir ledit mélange mozzarella broyée à 70°C pendant 40 à 60 secondes, sous une agitation de 250 rpm, de manière à obtenir une masse fromagère homogène et malléable ;
d) refroidir la masse fromagère ainsi obtenue jusqu'à 55°C;
d) incorporer du Kéfir dans cette masse fromagère sous une agitation de 250 rpm ; et
e) éventuellement, mettre en forme et conditionner le produit obtenu ;
les proportions relatives de mozzarella, de morceaux d'abricot et de Kéfir, en poids par rapport au poids total du mélange constitué par la mozzarella, les morceaux d'abricot et le Kéfir, étant environ égales à 91%, 4% et 5%, respectivement.

Préférentiellement, dans ce mode de réalisation où un appareil de type cutter est utilisé, le mélange constitué par le fromage broyé et les éléments figurés est chauffé jusqu'à environ 70°C en 2 à 3 minutes, et maintenu à cette température pendant environ 40 secondes.

Selon encore un autre mode de réalisation, l'invention concerne la fabrication d'un produit fromager contenant 8% de yaourt, 60% de mozzarella et 32% de gouda non affiné. Le procédé selon l'invention comprend alors les étapes consistant à :
a) râper un mélange de mozzarella et de gouda non affiné;
b) traiter le mélange à une température de 65°C pendant 1,5 min en cutter sous une agitation de 100 rpm ;
c) refroidir le mélange à 50°C sous une agitation de 100 rpm ; et
d) incorporer du yaourt, par rapport au poids total du produit final, sous une agitation de 100 rpm ;
e) éventuellement mettre en forme et conditionner le mélange.

les proportions relatives de mozzarella, de gouda non affiné et de yaourt, en poids par rapport au poids total du mélange constitué par la mozzarella, le gouda non affiné et le yaourt, étant environ égales à 60%, 32% et 8%, respectivement.

### Produits fromagers

Le procédé selon l'invention permet d'obtenir des produits fromagers nouveaux présentant une texture ferme, élastique et fibreuse et le profil aromatique d'un ou de produit(s) laitier(s) fermenté(s) frais, tout en maintenant à l'état vivant la flore du produit laitier fermenté.

Plus spécifiquement, les produits fromagers selon l'invention présentent un profil de texture essentiellement similaire à celui du fromage à pâte filée de départ, en particulier la mozzarella.

La détermination du profil de texture d'un fromage peut être aisément réalisée par l'homme du métier, par exemple à l'aide de la méthode d'analyse de texture (Texture Profile Analysis) en double compression. Cette méthode de mesure, qui s'applique aux fromages à pâte pressée, est particulièrement adaptée aux pâtes homogènes non cuites. Le principe de cette méthode est d'imiter la mastication entre les molaires pour évaluer les critères de texture du fromage tels que fermeté, élasticité et cohésion. Cette évaluation est mise en oeuvre par deux cycles successifs de compression d'un échantillon entre deux plaques parallèles, au moyen d'une machine de traction/compression universelle (TAXT2i Texture Analyser, Stable Micro Systems, UK). En pratique une sonde reliée à un capteur de force comprime l'échantillon à vitesse constante et la force nécessaire pour comprimer l'échantillon à un taux donné est enregistrée.

De préférence les produits fromagers selon l'invention présentent d'après l'analyse du profil de texture (TPA) une fermeté comprise entre 3N et 6N, une élasticité comprise entre 67 % et 87 %,et une cohésion comprise entre 45 % et 65 %.

Les produits obtenus présentent un extrait-sec supérieur à 40%, une teneur en matière grasse comprise entre 3 et 60 %, de préférence entre 5 et 60%, exprimée en matière grasse/extrait-sec.

Du fait de leur texture ferme et élastique, ces produits fromagers peuvent être tranchés et croqués pour une utilisation de type "en-cas", par exemple. Ils peuvent être de toute forme (billes, sphères, cubes, parallélépipèdes, ovoïdes, etc...), et de tout grammage, de préférence de 5 à 500 g.

Le procédé sera mieux compris à l'aide de la description et des exemples d'application qui suivent :

### Exemple 1

On réalise une comparaison du nombre de ferments vivants dans un produit fromager obtenu après traitement thermique d'un mélange de mozzarella et de yaourt ou selon le procédé de l'invention.

On prépare un produit contenant 90% de mozzarella et 10% de yaourt. Les taux de survie des ferments du yaourt présents dans un produit fromager obtenu par un procédé classique, c'est-à-dire par traitement thermique à 66°C d'un mélange de yaourt et de mozzarella (procédé 1) sont comparés avec ceux mesurés pour un produit fromager fabriqué par le procédé de l'invention (procédé 2).

### Procédé de fabrication n°1 :

La mozzarella est pré-broyée par un traitement au cutter, avec une vitesse de rotation de 1000 rpm pendant 40 secondes. Du yaourt est alors ajouté à la mozzarella prébroyée, en quantité adéquate pour obtenir un ratio mozzarella/yaourt égal à 90/10 (poids/poids).

Le mélange est alors chauffé avec une vitesse de rotation de 500 rpm, par injection directe de vapeur, jusqu'à une température de 66°C, puis chambré (c'est à dire maintenu en température) à 66°C sous agitation à 250 rpm pendant 30 secondes.

La pâte obtenue est mise en forme dans une formatrice type CMT puis pressée en moule sous une pression de 2 bars, pendant 1 minute.

Les produits ainsi obtenus présentent les caractéristiques suivantes :

| | |
|---|---|
| extrait-sec (ES) : | 44,7% |
| pH : | 5,51 |
| matière grasse/extrait-sec (G/S) : | 40 % |

### Analyse des ferments du yaourt

| | Lactobacillus bulgaricus | Streptococcus thermophilus |
|---|---|---|
| yaourt seul | 7,6.10⁷ | 3,4.10⁸ |
| mélange 90% mozzarella + 10% yaourt avant chauffage | 1,2.10⁶ | 1,3.10⁷ |
| produit fini contenant 10% de yaourt | 5,2.10⁴ | 4.10⁶ |

L'analyse des ferments du yaourt ci-dessus montre que la teneur du produit fini en ferments du yaourt est diminuée par le traitement thermique par rapport au mélange non chauffé de 2 "log" pour *Lactobacillus bulgaricus* et de 1 "log" pour *Streptococcus thermophilus*.

### Procédé de fabrication n°2 :

La mozzarella pré-broyée est chauffée à 66°C en cuiseur malaxeur (type KS - Karl Schnell) par injection directe de vapeur avec une faible vitesse de rotation (120 rpm), pendant 2 à 4 minutes, jusqu'à obtention d'une masse plastique et homogène. Cette masse fromagère est ensuite chambrée à 66°C sous agitation à 100 rpm pendant 1 minute. Une étape de refroidissement est ensuite mise en oeuvre sous agitation à 100 rpm, jusqu'à une température de 50°C.

10% de yaourt est alors incorporé sous faible agitation (100 rpm).

La pâte ainsi obtenue est mise en forme dans une formatrice type CMT puis pressée en moule, sous une pression de 2 bars, pendant 1 minute, pour obtenir une boule de 20g.

Les produits finis ainsi obtenus présentent les caractéristiques suivantes :

| | |
|---|---|
| ES : | 49,3% |
| pH : | 5,54 |
| G/S : | 37% |

### Analyse des ferments du yaourt

| | Lactobacillus bulgaricus | Streptococcus thermophilus |
|---|---|---|
| yaourt seul | 7,6.10⁷ | 3,4.10⁸ |
| mozarella après refroidissement à 50°C | 0 | 0 |
| produit fini contenant 10% de yaourt | 7,6.10⁶ | 4.10⁷ |

Les résultats ci-dessus montrent que l'on retrouve intégralement la flore du yaourt, incorporé dans une proportion de 10%, dans le produit fini. Le procédé selon l'invention permet donc de préserver une grande partie de la flore du yaourt dans le produit fini par rapport au procédé de l'exemple 1.

Cet exemple montre donc tout l'intérêt du procédé selon l'invention sur la survie des ferments du yaourt dans le produit fini.

### Exemple 2

On prépare un produit selon le procédé de l'invention contenant 91 % de mozzarella, 5 % de Kéfir et 4 % de morceaux d'abricots selon le procédé suivant :

De la mozzarella (G/S = 27% et ES = 48 %) est pré-broyée dans un cutter avec une vitesse de rotation de 1300 rpm pendant 30 secondes. Des morceaux d'abricots sont alors ajoutés. Le mélange est chauffé à 70°C en cutter, sous faible agitation (500 rpm). Puis on incorpore à la masse fromagère ainsi obtenue et refroidie à 55°C, 5% de Kéfir. L'ensemble est maintenu sous faible agitation à 250 rpm pendant 45 secondes.

Le mélange final est passé sur une formatrice pour faire des bâtonnets (« string cheese ») ensuite conditionnés sous sachets (« flow-pack »)

Les produits obtenus se présentent sous forme d'en-cas, en forme de bâtonnets de fromage, de texture ferme et fibreuse avec des inclusions de morceaux d'abricots et un bon goût frais de Kéfir.

### Exemple 3

Le profil de texture d'un produit fromager selon l'invention, préparé à partir de mozarella et de yaourt (8%) a été analysé selon la méthode TPA de double compression, à l'aide d'un appareil TAXTi2 Texture Analyser. La comparaison de la texture du produit selon l'invention avec la texture de la mozarella de départ est rapportée dans le tableau ci-dessous :

| | Fermeté | Elasticité | Cohésion |
|---|---|---|---|
| Mozarella | 3,56 ± 0,27 N | 67,70 ± 0,35 % | 58,4 ± 0,69 % |
| Produit fromager (mozarella + yaourt 8 %) | 3,84 N | 86,05 % | 49,85 % |

### Exemple 4

On réalise selon le procédé de l'invention un produit contenant 8% de yaourt, 60% de mozzarella et 32% de gouda non affiné.

La mozzarella et le gouda sont râpés et les produits râpés sont chauffés à 65°C en cutter sous faible agitation (100 rpm) avec un temps de chambrage de 1,5 min.

Le mélange est refroidi à 50°C sous faible agitation (100 rpm) et on incorpore 8% de yaourt en poids par rapport au poids final du mélange, toujours sous faible agitation (100 rpm).

La pâte obtenue est mise en forme dans une formulatrice CHT puis pressée en moule sous une pression de 2 bars pendant 1 min.

Les produits obtenus présentent les caractéristiques suivantes :

| | |
|---|---|
| ES: | 48% |
| pH : | 5,52 |
| G/S : | 40% |

### Analyse des ferments du yaourt

| | Lactobacillus bulgaricus | Streptococcus thermophilus |
|---|---|---|
| yaourt seul | 7,6.10⁷ | 3,4.10⁸ |
| Mélange de fromages seul | 0 | 0 |
| produit fini contenant 8% de yaourt | 4.10⁶ | 3.10⁶ |

## Revendications

1. Procédé de fabrication d'un produit fromager à texture ferme, élastique et fibreuse et présentant le goût d'un produit laitier fermenté frais comprenant les étapes consistant à :
a) réduire par broyage ou râpage la taille d'un fromage à pâte filée, d'un mélange de fromages à pâte filée, ou d'un mélange de fromages comprenant au moins 50% en poids d'un ou plusieurs fromages à pâte filée;
b) chauffer jusqu'à une température comprise entre 60°C et 70°C et traiter, sous cisaillement, ledit fromage à pâte filée, ledit mélange de fromages à pâte filée ou ledit mélange de fromages comprenant au moins 50% en poids d'un ou plusieurs fromages à pâte filée, pendant un temps suffisant pour obtenir une masse fromagère homogène et malléable qui permet l'incorporation d'un produit fermenté ;
c) incorporer sous agitation un produit laitier fermenté frais, présentant une flore vivante, en une quantité suffisante pour conférer au produit fromager final les caractéristiques aromatiques du produit laitier fermenté incorporé, ladite quantité étant inférieure à 20% en poids par rapport au poids total du mélange constitué par la masse fromagère et le produit laitier fermenté frais, la masse fromagère étant préalablement refroidie à une température inférieure à la température de destruction de la flore présente dans ledit produit laitier fermenté frais ;
d) éventuellement mettre en forme et conditionner le produit obtenu.

2. Procédé selon la revendication 1, dans lequel la quantité du produit laitier fermenté est comprise entre 3 et 20 % en poids par rapport au poids total du mélange constitué par la masse fromagère et le produit laitier.

3. Procédé selon la revendication 1 ou 2, dans lequel le produit laitier fermenté a une teneur en extrait-sec inférieure à 30%.

4. Procédé selon l'une quelconque des revendications 1 à 3, dans lequel le produit laitier fermenté est du yaourt.

5. Procédé selon l'une quelconque des revendications 1 à 4, dans lequel le fromage à pâte filée est de la mozzarella.

6. Procédé selon l'une quelconque des revendications 1 à 5, dans lequel ledit mélange de fromages comprenant au moins 50% en poids d'un ou plusieurs fromages à pâte filée comprend un ou plusieurs fromages à pâte pressée sélectionnés dans le groupe constitué du gouda, du cheddar, et de l'edam, lesdits formages à pâte pressée étant peu ou pas affinés.

7. Procédé selon l'une quelconque des revendications 1 à 6, dans lequel les étapes a) et b) et le refroidissement de la masse fromagère mettent en oeuvre un traitement mécanique réalisé en cutter sous un cisaillement compris entre 50 et 600 rpm.

8. Procédé selon l'une quelconque des revendications 1 à 6, dans lequel les étapes a) à c) mettent en oeuvre un traitement mécanique réalisé dans un malaxeur, un cuiseur-mélangeur, un mélangeur, un co-malaxeur ou un extrudeur.

9. Procédé selon l'une quelconque des revendications 1 à 8, dans lequel le traitement thermique de l'étape b) est maintenu pendant une durée totale comprise entre 1 et 5 minutes.

10. Procédé selon l'une quelconque des revendications 1 à 9, dans lequel le produit fromager final est formé par coulage, dosage ou moulage, et refroidi à une température inférieure à 15°C.

11. Procédé selon l'une quelconque des revendications 1 à 10, dans lequel le fromage à pâte filée ou le mélange de fromages à pâte filée est réduit en morceaux de taille comprise inférieure à 2 cm au cours de l'étape a).

12. Procédé selon l'une quelconque des revendications 1 à 11, comprenant les étapes consistant à :
a) broyer de la mozzarella en morceaux de taille inférieure à 2 cm ;
b) chauffer pendant 2 à 4 minutes, jusqu'à une température d'environ 66°C, en cuiseur-malaxeur avec une vitesse de rotation de 160 rpm, ladite mozzarella broyée, puis maintenir ladite mozzarella broyée à 66°C pendant 1 à 2 minutes ;
c) refroidir la masse fromagère ainsi obtenue jusqu'à 50°C par agitation à 100 rpm ;
d) incorporer du yaourt dans cette masse fromagère sous une agitation de 100 rpm, ledit yaourt étant ajouté en une quantité environ égale à 10% en poids par rapport au poids total du mélange constitué par la masse fromagère et le yaourt ; et
e) éventuellement, mettre en forme et conditionner le produit obtenu.

13. Procédé selon l'une quelconque des revendications 1 à 11, comprenant les étapes consistant à :
a) broyer de la mozzarella dans un cutter avec une agitation de 1300 rpm pendant environ 30 secondes ;
b) ajouter des morceaux d'abricot ;
c) chauffer pendant 2 à 3 minutes, jusqu'à une température d'environ 70°C, en cutter, avec une vitesse de rotation de 500 rpm, le mélange de mozzarella broyée et de morceaux d'abricot, puis maintenir ledit mélange mozzarella broyée à 70°C pendant 40 à 60 secondes, sous une agitation de 250 rpm ;
d) refroidir la masse fromagère ainsi obtenue jusqu'à 55°C;
e) incorporer du Kéfir dans cette masse fromagère sous une agitation de 250 rpm ; et
f) éventuellement, mettre en forme et conditionner le produit obtenu ;
les proportions relatives de mozzarella, de morceaux d'abricot et de Kéfir, en poids par rapport au poids total du mélange constitué par la mozzarella, les morceaux d'abricot et le Kéfir, étant environ égales à 91%, 4% et 5%, respectivement.

14. Procédé selon l'une quelconque des revendications 1 à 11, comprenant les étapes consistant à :
a) râper un mélange de mozzarella et de gouda non affiné;
b) traiter le mélange à une température de 65°C pendant 1,5 min en cutter sous une agitation de 100 rpm ;
c) refroidir le mélange à 50°C sous une agitation de 100 rpm ; et
d) incorporer du yaourt sous une agitation de 100 rpm ;
e) éventuellement mettre en forme et conditionner le mélange ;
les proportions relatives de mozzarella, de gouda non affiné et de yaourt, en poids par rapport au poids total du mélange constitué par la mozzarella, le gouda non affiné et le yaourt, étant environ égales à 60%, 32% et 8%, respectivement.

15. Produit fromager de texture ferme, élastique et fibreuse et présentant le profil aromatique d'un produit laitier fermenté frais susceptible d'être obtenu par le procédé selon l'une quelconque des revendications 1 à 14.

## Claims

1. Process for manufacturing a cheese product having a firm, elastic, fibrous texture and having the flavour of a fresh fermented dairy product, comprising the steps of:
a) reducing the size of a pulled-curd cheese, a mixture of pulled-curd cheeses or a mixture of cheeses comprising at least 50% by weight of one or more pulled-curd cheeses, by breaking up or grating;
b) heating said pulled-curd cheese, said mixture of pulled-curd cheeses or said mixture of cheeses comprising at least 50% by weight of one or more pulled-curd cheeses to a temperature of between 60°C and 70°C and treating it, under shear forces, for a sufficient time to obtain a homogeneous and malleable cheese mass which allows the incorporation of a fermented product;
c) incorporating a fresh fermented dairy product having live flora, with stirring, in an amount sufficient to impart to the cheese end product the aroma characteristics of the fermented dairy product incorporated, said amount being less than 20% by weight based on the total weight of the mixture consisting of the cheese mass and the fresh fermented dairy product, the cheese mass being chilled beforehand to a temperature below the temperature at which the flora present in said fresh fermented dairy product is destroyed;
d) optionally moulding and packaging the product obtained.

2. Process according to claim 1, wherein the amount of fermented dairy product is between 3 and 20% by weight, based on the total weight of the mixture consisting of the cheese mass and the dairy product.

3. Process according to claim 1 or 2, wherein the fermented dairy product has a solid content of less than 30%.

4. Process according to any one of claims 1 to 3, wherein the fermented dairy product is yoghurt.

5. Process according to any one of claims 1 to 4, wherein the pulled-curd cheese is mozzarella.

6. Process according to any one of claims 1 to 5, wherein the mixture of cheeses comprising at least 50% by weight of one or more pulled-curd cheeses comprises one or more pressed-curd cheeses selected from among gouda, cheddar and edam, said pressed-curd cheeses being ripened only slightly or not at all.

7. Process according to any one of claims 1 to 6, wherein steps a) and b) and the chilling of the cheese mass make use of a mechanical treatment carried out with a cutter under a shear force of between 50 and 600 rpm.

8. Process according to any one of claims 1 to 6, wherein steps a) to c) make use of a mechanical treatment carried out in a blender, a cooker/mixer, a mixer, a co-blender or an extruder.

9. Process according to any one of claims 1 to 8, wherein the heat treatment in step b) is continued for a total time of between 1 and 5 minutes.

10. Process according to any one of claims 1 to 9, wherein the final cheese product is formed by pouring, metering or moulding, and chilled to a temperature below 15°C.

11. Process according to any one of claims 1 to 10, wherein the pulled-curd cheese or the mixture of pulled-curd cheeses is reduced into pieces less than 2 cm in size during step a).

12. Process according to any one of claims 1 to 11, comprising the steps of:
a) breaking mozzarella into pieces less than 2 cm in size;
b) heating said broken-up mozzarella for 2 to 4 minutes, to a temperature of about 66°C, in a cooker/blender with a speed of rotation of 160 rpm, then keeping said broken-up mozzarella at 66°C for 1 to 2 minutes;
c) cooling the cheese mass thus obtained to 50°C by stirring at 100 rpm;
d) incorporating yoghurt into this cheese mass with stirring at 100 rpm, said yoghurt being added in an amount approximately equal to 10% by weight based on the total weight of the mixture consisting of the cheese mass and the yoghurt; and
e) optionally moulding and packaging the product obtained.

13. Process according to any one of claims 1 to 11, comprising the steps of:
a) breaking mozzarella into pieces in a cutter with stirring at 1300 rpm for about 30 seconds;
b) adding pieces of apricot;
c) heating the mixture of broken up mozzarella and apricot pieces for 2 to 3 minutes, to a temperature of about 70°C, in a cutter, with a speed of rotation of 500 rpm, then keeping said broken up mozzarella mixture at 70°C for 40 to 60 seconds, with stirring at 250 rpm;
d) chilling the cheese mass thus obtained to 55°C;
e) incorporating kefir in this cheese mass with stirring at 2450 rpm; and
f) optionally moulding and packaging the product obtained;
the relative proportions of mozzarella, apricot pieces and kefir, by weight, based on the total weight of the mixture consisting of the mozzarella, apricot pieces and kefir, being about 91%, 4% and 5%, respectively.

14. Process according to any one of claims 1 to 11, comprising the steps of:
a) grating a mixture of mozzarella and unripened gouda;
b) treating the mixture at a temperature of 65°C for 1.5 min in a cutter with stirring at 100 rpm;
c) cooling the mixture to 50°C with stirring at 100 rpm; and
d) incorporating yoghurt with stirring at 100 rpm;
e) optionally forming and packaging the mixture;
the relative proportions of mozzarella, unripened gouda and yoghurt, by weight, based on the total weight of the mixture consisting of the mozzarella, unripened gouda and yoghurt, being about 60%, 32% and 8%, respectively.

15. Cheese product having a firm, elastic, fibrous texture and having the aroma profile of a fresh fermented dairy product, obtainable by the process according to any one of claims 1 to 14.

## Patentansprüche

1. Verfahren zur Herstellung eines Käseprodukts mit fester, elastischer und faseriger Struktur, die den Geschmack eines frischen fermentierten Milchprodukts aufweist, welches die folgenden Schritte umfasst:
a) Vermindern der Größe eines Käses, der Fäden zieht, einer Mischung von Käsen, die Fäden ziehen, oder einer Mischung von Käsen, die mindestens 50 Gew.-% eines oder mehrerer Käse, die Fäden ziehen, enthält, durch Mahlen oder Raspeln;
b) Erwärmen bis auf eine zwischen 60 °C und 70 °C liegende Temperatur und Behandeln des Käses, der Fäden zieht, der Mischung von Käsen, die Fäden ziehen, oder der Mischung von Käsen, die mindestens 50 Gew.-% eines oder mehrerer Käse umfassen, die Fäden ziehen, unter Scheren während einer Zeit, die ausreicht zur Herstellung einer homogenen und geschmeidigen Käsemasse, die die Einarbeitung eines fermentierten Produkts erlaubt;
c) Einarbeiten unter Rühren eines frischen fermentierten Milchproduktes, dass eine lebende Flora enthält, in ausreichender Menge, um dem Endkäseprodukt die aromatischen Eigenschaften des eingearbeiteten fermentierten Milchproduktes zu verleihen, wobei die genannte Menge geringer ist als 20 Gew.-% bezogen auf das Gesamtgewicht der Mischung, die aus der Käsemasse und dem frischen fermentierten Milchprodukt besteht, wobei die Käsemasse bevorzugt auf eine Temperatur abgekühlt wird, die niedriger ist als die Zersetzungstemperatur der im frischen fermentierten Milchprodukt vorhandenen Flora;
d) gegebenenfalls Formen und Konditionieren des erhaltenen Produkts.

2. Verfahren nach Anspruch 1, wobei die Menge des fermentierten Milchproduktes zwischen 3 und 20 Gew.-% bezogen auf das Gesamtgewicht der Mischung beträgt, die aus der Käsemasse und dem Milchprodukt besteht.

3. Verfahren nach Anspruch 1 oder 2, wobei das fermentierte Milchprodukt einen Gehalt an Trockenextrakt von weniger als 30 % aufweist.

4. Verfahren nach einem der Ansprüche 1 bis 3, wobei das fermentierte Milchprodukt Joghurt ist.

5. Verfahren nach einem der Ansprüche 1 bis 4, wobei Käse, der Fäden zieht, Mozzarella ist.

6. Verfahren nach einem der Ansprüche 1 bis 5, wobei die genannte Käsemischung, die mindestens 50 Gew.-% eines oder mehrerer Käse, die Fäden ziehen, enthält, einen oder mehrere gepresste Käse umfasst, die ausgewählt werden aus der aus Gouda, Cheddar und Edamer bestehenden Gruppe, wobei die gepressten Käse kaum oder nicht abgelagert sind.

7. Verfahren nach einem der Ansprüche 1 bis 6, wobei die Schritte a) und b) und das Abkühlen der Käsemasse in einer mechanischen Behandlung erfolgen, die in einem Cutter mit einer Scherung zwischen 50 und 600 UpM durchgeführt werden.

8. Verfahren nach einem der Ansprüche 1 bis 6, wobei die Schritte a) bis c) in einer mechanische Behandlung erfolgen, die in einem Mischer, in einem Kocher-Melangeur, einem Melangeur, einem Co-Mischer, oder einem Extruder durchgeführt werden.

9. Verfahren nach einem der Ansprüche 1 bis 8, wobei die thermische Behandlung in Schritt b) während einer Gesamtdauer zwischen 1 und 5 min durchgeführt wird.

10. Verfahren nach einem der Ansprüche 1 bis 9, wobei das Endkäseprodukt durch Giessen, Dosieren oder Mahlen erhalten wird und auf eine Temperatur von weniger als 15 °C gekühlt wird.

11. Verfahren nach einem der Ansprüche 1 bis 10, wobei der Käse, der Fäden zieht, oder die Mischung von Käsen, die Fäden ziehen, im Verlauf von Schritt a) auf Stücke einer Größe zerkleinert wird, die kleiner ist als 2 cm.

12. Verfahren nach einem der Ansprüche 1 bis 11, umfassend die Schritte:
a) Mahlen des Mozzarella in Stücke mit einer Größe von weniger als 2 cm;
b) Erwärmen des zermahlenen Mozzarellas während 2 bis 4 min bis auf eine Temperatur von ungefähr 66 °C in einem Kocher-Mischer mit einer Umdrehungsgeschwindigkeit von 160 UpM, anschließend Halten des gemahlenen Mozzarellas bei 66 °C während 1 bis 2 min;
c) Kühlen der so erhaltenen Käsemasse auf 50 °C durch Rühren bei 100 UpM;
d) Einarbeiten von Joghurt in diese Käsemasse unter Rühren bei 100 UpM, wobei der Joghurt in einer Menge von ungefähr 10 Gew.-% bezogen auf das Gesamtgewicht der Mischung zugegeben wird, die von der Käsemasse und dem Joghurt gebildet wird; und
e) gegebenenfalls Formen und Konditionieren des erhaltenen Produkts.

13. Verfahren nach einem der Ansprüche 1 bis 11, umfassend die Schritte:
a) Mahlen von Mozzarella in einem Cutter mit einer Rührgeschwindigkeit von 1300 UpM während ungefähr 30 sek;
b) Zufügen von Aprikosenstücken;
c) Erwärmen der Mischung des zermahlenen Mozzarellas und der Aprikosenstücke während 2 bis 3 min auf eine Temperatur von ungefähr 70 °C in einem Cutter mit einer Umdrehungsgeschwindigkeit von 500 UpM, anschließend Halten der gemahlenen Mozzarellamischung bei 70 °C während 40 bis 60 sek unter Rühren bei 250 UpM;
d) Kühlen der so erhaltenen Käsemasse auf 55 °C;
e) Einarbeiten von Kefir in diese Käsemasse unter Rühren bei 250 UpM; und
f) gegebenenfalls Formen und Konditionieren des erhaltenen Produkts;
wobei die relativen Anteile von Mozzarella, Aprikosenstücken und Kefir nach Gewicht bezogen auf das Gesamtgewicht der von Mozzarella, Aprikosenstücken und Kefir gebildeten Mischung ungefähr gleich 91 %, 4 % bzw. 5 % sind.

14. Verfahren nach einem der Ansprüche 1 bis 11, umfassend die Schritte:
a) Raspeln einer Mischung aus Mozzarella und nicht-abgelagertem Gouda;
b) Behandeln der Mischung bei einer Temperatur von 65 °C während 1,5 min in einem Cutter unter Rühren bei 100 UpM;
c) Kühlen der Mischung auf 50 °C unter Rühren bei 100 UpM; und
d) Einarbeiten von Joghurt unter Rühren bei 100 UpM;
e) gegebenenfalls Formen und Konditionieren der Mischung;
wobei die relativen Anteile von Mozzarella, nicht-abgelagertem Gouda und Joghurt nach Gewicht bezogen auf das Gesamtgewicht der aus Mozzarella, nicht-abgelagertem Gouda und Joghurt gebildeten Mischung ungefähr gleich 60 %, 32 % bzw. 8 % sind.

15. Käseprodukt mit fester, elastischer und fasriger Struktur, welches ein aromatisches Profil eines frischen fermentierten Milchproduktes aufweist, und durch ein Verfahren nach einem der Ansprüche 1 bis 14 erhältlich ist.
